# EUROPÄISCHE PATENTSCHRIFT

(11) **EP 3 597 898 B1**
(45) Veröffentlichungstag und Bekanntmachung des Hinweises auf die Patenterteilung: **24.02.2021**
(21) Anmeldenummer: 19185679.8
(22) Anmeldetag: 11.07.2019
(51) Int. Cl.: F02M 25/08, F02M 35/10, F02M 21/04

(54) **BRENNKRAFTMASCHINE MIT EINER IN EINEM FLUIDFÜHRENDEN, FLUIDAL MIT EINER TANKENTLÜFTUNGSLEITUNG VERBUNDENEN BAUTEIL VORGESEHENE VENTURIDÜSE**
COMBUSTION ENGINE WITH A VENTURI NOZZLE IN A FLUID CONDUCTING COMPONENT WITH A FLUIDAL CONNECTION TO A TANK VENTING LINE
MOTEUR À COMBUSTION INTERNE DOTÉ D'UN TUBE DE VENTURI POURVU D'UN COMPOSANT RACCORDÉ DE MANIÈRE FLUIDIQUE À UNE CONDUITE DE PURGE DE RÉSERVOIR, GUIDANT UN FLUIDE

(30) Priorität: 20.07.2018 DE 102018212149
(43) Veröffentlichungstag der Anmeldung: 22.01.2020
(73) Patentinhaber: Volkswagen AG, 38440 Wolfsburg (DE)
(72) Erfinder: Koch, Johannes, 38118 Braunschweig (DE); Künstner, Marko, 38368 Rennau (DE)

(56) Entgegenhaltungen:
- EP-A2- 3 557 038
- WO-A1-2019/195564
- DE-A1-102016 015 299
- DE-A1-102016 210 570

## Beschreibung

Die Erfindung betrifft eine Brennkraftmaschine mit mindestens einer in einem fluidführenden Bauteil vorgesehenen Venturidüse gemäß dem Oberbegriff des Anspruchs 1.

Aus DE 10 2011 084 539 B3 ist ein Turbolader mit einem Verdichter bekannt, wobei der Verdichter einen Niederdruckeingangsbereich verbunden mit einer Niederdruckseite eines Saugrohrs und einen Hochdruckausgangbereich verbunden mit einer Hochdruckseite des Saugrohrs aufweist. Der Turbolader weist eine Venturidüse auf, welche zwischen dem Niederdruckeingangsbereich und dem Hochdruckausgangsbereich angeordnet ist. Weiterhin ist die Venturidüse mit einem Aktivkohlefilter in einer Tankentlüftungsleitung verbunden, so dass der Aktivkohlefilter entlüftet bzw. regeneriert wird. Die Venturidüse kann in das Gehäuse des Verdichters integriert sein oder an diesem befestigt sein. Details zur Integration oder Befestigung der Venturidüse an dem Gehäuse des Verdichters sind diesem Dokument nicht zu entnehmen.

Aus DE 41 24 465 A1 sind eine Tankentlüftungsanlage sowie ein Verfahren und eine Vorrichtung zum Prüfen der Funktionsfähigkeit einer solchen Tankentlüftungsanlage bekannt. Die Vorrichtung weist einen Druckanschluss auf, mit welchem der Tank mit Druck beaufschlagt werden kann, wobei über einen Drucksensor der Druck im Tank überprüft werden kann. Das Dokument betrifft dabei im Wesentlichen die Bereiche des Tanks, einer Tankanschlussleitung und eines Absorptionsfilters. Eine Venturidüse oder die Möglichkeit einer Detektion einer Leckage im Bereich der Einleitung von Tankgasen in ein Saugrohr sind in dem Dokument nicht beschrieben.

Aus US 5,918,580 A ist eine Tankentlüftungsanlage bekannt, welche eine Tankentlüftungsleitung aufweist, die in ein Saugrohr mündet und einen Absorptionsfilter umfasst. Das Dokument betrifft überwiegend die Förderung von Tankgasen in Richtung Saugrohr. Details zur Anordnung einer Venturidüse im Bereich des Saugrohrs sind dem Dokument nicht zu entnehmen.

Ein weiteres Beispiel ist aus dem DE 10 2016 210570 A1 bekannt.

Der Erfindung liegt die Aufgabe zugrunde, eine Brennkraftmaschine gemäß dem Oberbegriff des Anspruchs 1 zur Verfügung zu stellen, mittels welcher zuverlässig verhindert werden kann, dass kraftstoffhaltige Luft in die Umgebung gelangt.

Die Lösung der Aufgabe erfolgt erfindungsgemäß mit den Merkmalen des Anspruchs 1. Weitere praktische Ausführungsformen und Vorteile der Erfindung sind in Verbindung mit den abhängigen Ansprüchen beschrieben.

Eine erfindungsgemäße Brennkraftmaschine umfasst einen Kraftstofftank, eine Tankentlüftungsleitung und eine in einem fluidführenden Bauteil vorgesehene Venturidüse, wobei die Venturidüse einen Einströmkanal aufweist, welcher insbesondere fluidal mit einem Druckrohr stromabwärts eines Verdichters eines Abgasturboladers verbunden ist. Die Venturidüse weist ferner eine sich stromabwärts des Einströmkanals anschließende Mündungsstelle mit einer fluidalen Verbindung zu der Tankentlüftungsleitung sowie einen sich stromabwärts der Mündungsstelle anschließenden Ausströmkanal auf. Der Ausströmkanal mündet insbesondere in eine Ansaugstrecke stromaufwärts eines Verdichters eines Abgasturboladers. Die Strömung von Ansaugluft durch die Venturidüse entlang der Hauptströmungsrichtung von dem Einströmkanal in Richtung des Ausströmkanals erzeugt einen Unterdruck in der Tankentlüftungsleitung, wodurch eine Entlüftung des Kraftstofftanks bewirkt wird. Ein Ausströmabschnitt der Venturidüse stromabwärts der Mündungsstelle ist derart von dem Bauteil der Ansaugstrecke umgeben, dass um den Ausströmabschnitt herum ein Detektionsraum gebildet ist. Dabei weist der Detektionsraum mindestens eine Eingangsöffnung auf, über welche der Detektionsraum mit Druck beaufschlagbar ist. Ferner ist mindestens ein Drucksensor zur Überwachung des Drucks im Detektionsraum vorgesehen.

Insbesondere ist der gesamte Ausströmkanal von dem durch das Bauteil gebildeten Detektionsraum umgeben. Abgesehen von der einen Einströmöffnung oder mehreren Einströmöffnungen handelt es sich bei dem Detektionsraum vorzugsweise um einen abgeschlossenen Raum, d.h. einen Raum, der gegenüber anderen, ggf. über Spalte erreichbare Räume sowie gegenüber der ggf. über Spalte erreichbaren Umgebung geeignet abgedichtet ist, beispielsweise durch die geeignete Anordnung von Dichtelementen.

In der Praxis sind Venturidüsen, die wie vorstehend beschrieben zur Tankentlüftung genutzt werden, häufig in Bauteilen angeordnet, die - beispielsweise aufgrund einer von einem Bauteil hervorragenden Positionierung - bei Reparatur- oder Wartungsarbeiten beschädigt werden können. Darüber hinaus sind auch altersbedingte und materialermüdungsbedingte Schäden an derartigen Bauteilen möglich. Beschädigungen im Bereich der Mündungsstelle, an der die Tankentlüftungsleitung in die Venturidüse mündet, kann in der Praxis üblicherweise am Aktivkohlebehälter detektiert werden, da durch eine aussetzende oder nur noch zuzureichende Tankentlüftung der Aktivkohlebehälter nicht regeneriert wird. Dies wird von einem entsprechenden Überwachungssystem detektiert. Auf die gleiche Art und Weise kann auch eine Beschädigung des Einströmkanals der Venturidüse stromaufwärts der Mündungsstelle detektiert werden, weil in diesem Fall kein Unterdruck mehr in der Tankentlüftungsleitung erzeugt wird.

Problematisch hingegen sind Beschädigungen an der Venturidüse in dem Bereich stromabwärts der Mündungsstelle, da hier - vor allem bei Venturidüsen mit großer Länge stromabwärts der Mündungsstelle - besonders hohe Hebelkräfte wirken. Beschädigungen des Ausströmabschnitts stromabwärts der Mündungsstelle sind bislang nicht detektierbar, da die Menge der austretenden Ansaugluft und insbesondere der damit verbundene Druckabfall innerhalb der Venturidüse sehr gering sind und damit üblicherweise innerhalb der Messtoleranzen von entsprechenden Detektionsmitteln (insbesondere Drucksensoren) liegen. Eine unbemerkte Beschädigung kann insoweit dazu führen, dass über einen längeren Zeitraum kraftstoffhaltige Dämpfe in die Umgebung gelangen.

Mit der erfindungsgemäßen Brennkraftmaschine können Beschädigungen im Ausströmabschnitt zuverlässig detektiert werden. Damit kann sichergestellt werden, dass keine kraftstoffhaltige Ansaugluft über einen längeren Zeit in die Umgebung gelangt. Die Anordnung des Abschnitts der Venturidüse stromabwärts der Mündungsstelle in einem von dem Bauteil gebildeten Detektionsraum hat zwei Effekte.

Wenn zum einen lediglich die Venturidüse stromabwärts der Mündungsstelle beschädigt wird, strömt die kraftstoffenthaltene Ansaugluft in den mit Druck beaufschlagten Detektionsraum und kann aus diesem nicht in die Umgebung entweichen.

Zum anderen wird durch die umgebende Anordnung des Abschnitts stromabwärts der Mündungsstelle von dem Bauteil der Ansaugstrecke dieser Abschnitt besonders gut gegen Beschädigungen geschützt. Falls es zu einer - eher unwahrscheinlichen - Beschädigung sowohl der Venturidüse als auch des diese umgebenden Bauteils kommt, so ist das in dem Detektionsraum vorhandene Ansaugluftvolumen derart groß, dass ein durch entweichende Ansaugluft bewirkter Druckabfall von dem Drucksensor leicht und zuverlässig detektierbar ist.

Die erfindungsgemäße Brennkraftmaschine mit einer umgebenden Anordnung der Venturidüse wirkt so einer Beschädigung der Venturidüse im Bereich eines Abschnittes stromabwärts der Mündungsstelle entgegen und ermöglicht ferner eine zuverlässige Detektion, falls die Venturidüse und das umgebende Bauteil beschädigt werden.

Einer Beschädigung der Venturidüse wird besonders gut entgegengewirkt, wenn der gesamte Ausströmabschnitt, d.h. der vollständige Ausströmkanal von dem Bauteil umgeben ist. Das Bauteil kann auch so ausgelegt sein, dass zumindest teilweise auch der Einströmkanal und/oder zumindest teilweise auch ein Anschluss zur Tankentlüftungsleitung von dem Bauteil umgeben ist. In diesem Fall ist der Detektionsraum so gestaltet, dass ein überwiegender Teil der Venturidüse oder die gesamte Venturidüse von dem Bauteil und dem Detektionsraum umgeben ist. Dadurch wird die Venturidüse in den entsprechenden Abschnitten und Bereichen auch wirksam gegenüber äußeren Krafteinwirkungen und Beschädigungen geschützt.

In einer praktischen Ausführungsform ist das fluidführende Bauteil eine Ansaughutze oder ein Abgasturbolader. Die aus der Venturidüse herausströmende Ansaugluft mit den kraftstoffhaltigen Tankentlüftungsgasen strömt demnach entweder über eine Ansaughutze, welche in Fluidverbindung mit einem Abgasturbolader steht, unmittelbar in eine Ansaugstrecke stromaufwärts eines Abgasturboladers oder unmittelbar in einen Abgasturbolader. In diesem Fall sind entweder die Ansaughutze selbst oder der Abgasturbolader insbesondere derart ausgebildet, dass zumindest ein Ausströmabschnitt der Venturidüse stromabwärts der Mündungsstelle derart umgeben ist, dass das jeweilige Bauteil (Ansaughutze oder Abgasturbolader) zumindest teilweise einen Detektionsraum bildet.

Insbesondere ist die Eingangsöffnung zur Beaufschlagung des Detektionsraumes mit Druck fluidal mit einem Druckrohr stromabwärts eines Abgasturboladers verbunden. Das Druckrohr schließt sich dabei stromabwärts eines Verdichters des Abgasturboladers an. Ausgehend von dem Druckrohr strömt verdichtete Ansaugluft in Richtung Brennraum. Von dem Druckrohr zweigt ein Teilstrom T ab, welcher in den Einlasskanal der Venturidüse mündet. Dieser Teilstrom wird nochmals in zwei Teilströme aufgeteilt, wobei ein Teilstrom T₁ in den Einlasskanal der Venturidüse mündet, und ein Teilstrom T₂ zur Beaufschlagung des Detektionsraums mit Druck verwendet wird. Damit herrscht in der Venturidüse und in dem Detektionsraum der gleiche Druck. Es ist insbesondere keine weitere zusätzliche Druckquelle zur Beaufschlagung des Detektionsraumes mit Druck notwendig, sondern es wird in einfacher Weise der von dem Verdichter bereitgestellte Druck verwendet.

In Zusammenhang mit dem vorstehend Beschriebenen ist es besonders vorteilhaft, wenn der Drucksensor in dem Druckrohr stromabwärts des Abgasturboladers angeordnet ist. In diesem Fall kann der Drucksensor, welcher bei den meisten Brennkraftmaschinen bereits vorhanden ist, um den Druck in dem Druckrohr stromabwärts des Abgasturboladers zu detektieren, auch für die Detektion von Beschädigungen im Ausströmabschnitt genutzt werden. Zusätzliche Kosten für den Drucksensor fallen dann nicht an. Sollte es zu einer Beschädigung des Bauteils im Bereich des Detektionsraumes und gegebenenfalls zu einer Beschädigung der Venturidüse stromabwärts der Mündungsstelle kommen, kann es bei der erfindungsgemäßen Brennkraftmaschine auch zu einem Abfall des Drucks in dem Druckrohr kommen, von dem der Teilstrom T₂ zur Beaufschlagung des Detektionsraumes abgezweigt wird.

In einer weiteren praktischen Ausführungsform ist die mindestens eine Eingangsöffnung in den Detektionsraum vor oder in dem Einströmkanal der Venturidüse ausgebildet. Bei einer Ausbildung der Eingangsöffnung in dem Einströmkanal sind vorzugsweise über den Umfang des Einströmkanals verteilt mehrere Eingangsöffnung in den Detektionsraum ausgebildet. So kann insbesondere eine radiale Einströmung von Ansaugluft in den Detektionsraum realisiert sein. Die Ausbildung von Eingangsöffnungen in dem Einströmkanal stellt eine besonders platzsparende Lösung dar. Die Summe der Durchmesser sämtlicher Eingangsöffnungen beträgt insbesondere mindestens 5 mm, bevorzugt mindestens 7 mm und besonders bevorzugt mindestens 10 mm. Im Vergleich dazu beträgt der kleinste Durchmesser der Venturidüse insbesondere maximal 3 mm, bevorzugt maximal 2,5 mm und insbesondere maximal 2 mm.

Insbesondere in Verbindung mit einer Eingangsöffnung vor dem Einströmkanal ist die mindestens eine Eingangsöffnung in den Detektionsraum vorzugsweise strömungsparallel des Einströmkanals der Venturidüse ausgebildet, z.B. oberhalb, unterhalb oder neben dem Einströmkanal. Insbesondere erfolgt die Einströmung von Ansaugluft in den Detektionsraum in einer Richtung parallel zur Einströmung von Ansaugluft in den Einströmkanal. Die parallele bzw. axiale Einströmung stellt eine einfache Möglichkeit dar, Ansaugluft aus einem einheitlichen Massenstrom auch in den Detektionsraum strömen zu lassen.

Zur Realisierung von strömungsparallel zur Hauptströmungsrichtung einströmender Ansaugluft in den Detektionsraum ist insbesondere an der Venturidüse im Bereich des Einströmkanals ein Anschlussstutzen angeordnet, dessen Innendurchmesser größer ist als der Innendurchmesser des Einströmkanals. Ein solcher Anschlussstutzen kann einstückig mit der Venturidüse ausgebildet oder als separates Element hergestellt und entsprechend angeordnet sein. In den Anschlussstutzen strömt stromaufwärts des Einströmkanals vorzugsweise zunächst der gesamte Teilstrom T, welcher in dem Anschlussstutzen in zwei Teilströme T₁ und T₂ in den Einströmkanal und in die mindestens eine Einströmöffnung aufgeteilt wird, insbesondere einen radial inneren Teilstrom T₁ und einen diesen radial umgebenden und umschließenden Teilstrom T₂.

In einer weiteren praktischen Ausführungsform ist die Venturidüse mehrteilig ausgebildet. Insbesondere können der Einströmkanal, der Ausströmkanal und ein Anschluss für die Tankentlüftungsleitung als separate Elemente ausgebildet sein, welche erst bei der Montage der Brennkraftmaschine miteinander verbunden werden, z.B. durch Zusammenstecken und/oder Verschweißen. Dabei umfasst die Venturidüse insbesondere einen Grundkörper, der einstückig mit dem Einströmkanal ausgebildet ist und in welchem der separate Einströmkanal und ein Anschluss für die Tankentlüftungsleitung vorgesehen sind. Alternativ kann die Venturidüse einstückig ausgebildet sein.

Die Venturidüse kann auch zwei oder mehr Mündungsstellen aufweisen, welche fluidleitend mit der Tankentlüftungsleitung verbunden sind, um eine besonders effektive Tankentlüftung zu bewirken. Jeweils im Bereich der Mündungsstelle ist die Venturidüse verengt. Falls mehrere Mündungsstellen vorgesehen sind, so ist insbesondere ein Abschnitt der Venturidüse von dem Bauteil und dem Detektionsraum umgeben, welcher sich stromabwärts der in Hauptströmungsrichtung betrachtet ersten Mündungsstelle erstreckt.

Die Erfindung wurde vor allem in Verbindung mit fluidführenden Bauteilen und/oder Venturidüsen in fluidführenden Bauteilen gemacht, die vollständig oder teilweise aus Kunststoff hergestellt sind. Denn gerade Bauteile aus Kunststoff können materialbedingt nach einer längeren Nutzungsdauer verspröden und dann plötzlich versagen. Ein derartiges Versagen kann mit der erfindungsgemäßen Brennkraftmaschine zuverlässig detektiert werden.

Weitere praktische Ausführungsformen der Erfindung sind nachfolgend im Zusammenhang mit den Zeichnungen beschrieben. Es zeigen:
- Fig. 1: eine schematische Darstellung einer erfindungsgemäßen Brennkraftmaschine,
- Fig. 2: den mit II Bereich aus Fig. 1 mit einer Venturidüse und einem Detektionsraum in einer schematischen Querschnittsdarstellung,
- Fig. 3: ein Druck-Zeit-Diagramm,
- Fig. 4: eine erste Ausführungsform einer erfindungsgemäßen Brennkraftmaschine mit einer Venturidüse in einer perspektivischen Ansicht,
- Fig. 5: die erste Ausführungsform aus Fig. 4 in einem Querschnitt durch die Venturidüse,
- Fig. 6: eine zweite Ausführungsform einer erfindungsgemäßen Brennkraftmaschine mit einer Venturidüse in einer perspektivischen Ansicht, und
- Fig. 7: die zweite Ausführungsform in einem Querschnitt durch die Venturidüse.

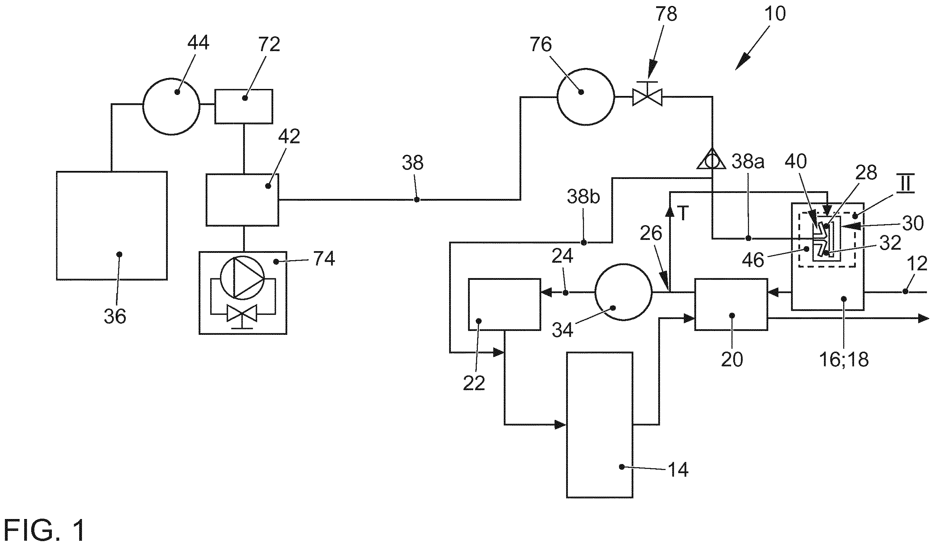

Fig. 1 zeigt eine erfindungsgemäße Brennkraftmaschine 10 in einer schematischen Darstellung, wobei im Folgenden nur diejenigen Elemente im Detail erläutert werden, welche in Verbindung mit der Erfindung potentiell relevant sind.

In der Brennkraftmaschine 10 ist eine Ansaugstrecke 12 ausgebildet, über welche Frischluft aus der Atmosphäre in Richtung eines Brennraums 14 gefördert werden kann. Als ein fluidführendes Bauteil 16 der Ansaugstrecke 12 ist eine Ansaughutze 18 vorgesehen. Stromabwärts der Ansaughutze 18 folgen ein Verdichter eines Abgasturboladers 20 sowie eine Drosselklappe 22.

Der Bereich stromabwärts des Verdichters wird als Druckrohr 24 bezeichnet. An einer Abzweigung 26 stromabwärts des Abgasturboladers 20 zweigt ein Teilstrom T von dem Druckrohr 24 ab, wobei der Teilstrom T in einen Einströmkanal 28 einer Venturidüse 30 geführt wird. Ein Ausströmkanal 32 der Venturidüse 30 führt zurück in die Ansaughutze 18.

Über den Ausströmkanal 32 und die Ansaughutze 18 wird Ansaugluft aus der Venturidüse 30 stromaufwärts des Abgasturboladers 20 in die Ansaugstrecke 12 geleitet.

Wie in Fig. 1 erkennbar ist, ist in dem Druckrohr 24, hier stromabwärts der Abzweigung 26 des Teilstroms T, ein Drucksensor 34 angeordnet.

Aus dem Brennraum 14 geführtes Abgas strömt über den Abgasturbolader 20 in Richtung einer Abgasanlage (nicht dargestellt).

Die Brennkraftmaschine 10 umfasst auch einen Kraftstofftank 36, welcher über eine Tankentlüftungsleitung 38 entlüftet wird. Ein erster Abzweig 38a der Tankentlüftungsleitung 38 führt zu einer Mündungsstelle 40 in die Venturidüse 30. Ein zweiter Abzweig 38b der Tankentlüftungsleitung 38 führt in den Bereich stromabwärts der Drosselklappe 22.

In dem Pfad der Tankentlüftungsleitung 38 sind ferner ein erster Druck- und Temperatursensor 44, ein Kraftstofftankisolierventil (FTIV) 72, ein Aktivkohlebehälter 42, ein Diagnosemodul Tankleckage (DMTL) 74, ein Druck-/Temperatursensor 76 und ein Tankentlüftungsventil (TEV) 78 angeordnet.

Wie in Fig. 1 auch bereits schematisch dargestellt ist und im Folgenden anhand der weiteren Figuren noch im Detail erläutert wird, ist die Venturidüse 30 zumindest teilweise von einem - in Fig. 1 nur als gestrichelter Kasten dargestellten - Detektionsraum 46 umgeben.

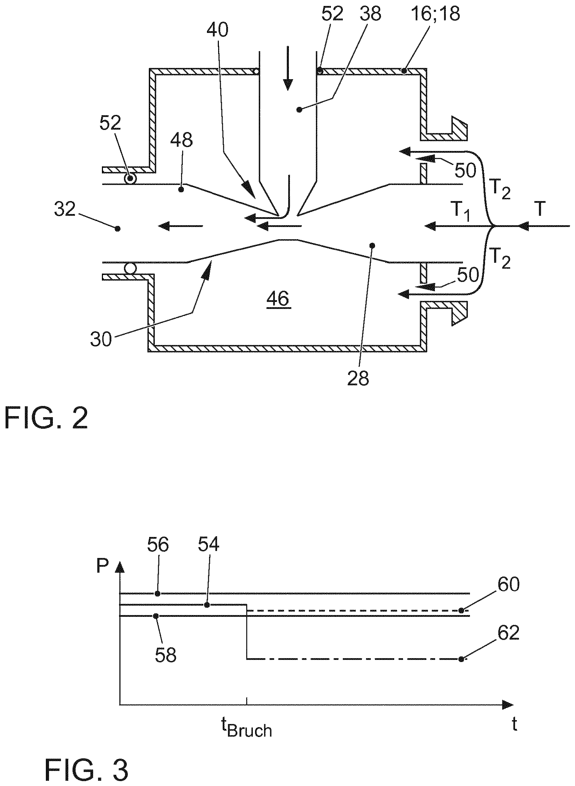

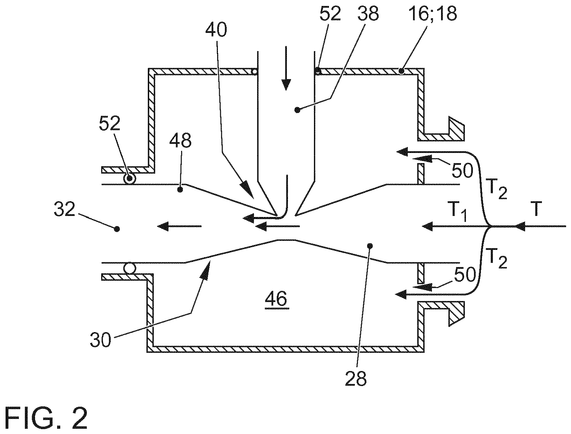

Fig. 2 zeigt die Venturidüse 30 und das fluidführende Bauteil 16 - hier als Teil der Ansaughutze 18 - in einer vereinfachten Schnittdarstellung. Die Venturidüse 30 weist auf der rechten Seite den Einströmkanal 28 und auf der linken Seite den Ausströmkanal 32 auf. An der Mündungsstelle 40 mündet von oben die Tankentlüftungsleitung 38.

Der von dem Druckrohr 24 (vgl. Fig. 1) abgezweigte Teilstrom T strömt teilweise in den Einströmkanal 28 und weiter in Hauptströmungsrichtung durch die Venturidüse 30 in Richtung Ausströmöffnung des Ausströmkanals 32. Durch die geometrische Gestaltung wird in der Tankentlüftungsleitung 38 im Bereich der Mündungsstelle 40 ein Unterdruck erzeugt, so dass kraftstoffhaltige Gase aktiv aus dem Kraftstofftank 36 bzw. aus dem Aktivkohlebehälter 42 heraus gefördert werden, welche über den Ausströmkanal 32 stromaufwärts des Abgasturboladers 20 in die Ansaugstrecke 12 münden (vgl. Fig. 1).

In der Darstellung gemäß Fig. 2 sind als Abschnitt stromabwärts der Mündungsstelle 40 nahezu der gesamte Ausströmkanal 32, nahezu der gesamte Einströmkanal 28 und ein Teil der Tankentlüftungsleitung 38 bis zur Mündungsstelle 40 derart von einem Gehäuseabschnitt der Ansaughutze 18 umgeben, dass ein diese Bereiche umschließender Detektionsraum 46 gebildet ist.

Der Detektionsraum 46 weist vorliegend zwei Einströmöffnungen 50 (oder alternativ eine kreisringförmige Einströmöffnung oder eine Vielzahl von Einströmöffnungen) auf, über welche der Detektionsraum 46 mit Ansaugluft gefüllt und daher mit einem gewissen Druck beaufschlagt wird. Die Abdichtung des Detektionsraums 46 gegenüber der Tankentlüftungsleitung 38 und gegenüber dem Ausströmkanal 43 erfolgt vorliegend über O-Ringe 52. Alternativ kann auch die Abdichtung gegenüber dem Einströmkanal 28 in gleicher Art und Weise erfolgen (nicht dargestellt), sofern eine solche Abdichtung konstruktiv notwendig und/oder sinnvoll ist.

Wie in Fig. 2 gut zu erkennen ist, wird sich der aus dem Druckrohr 24 abgezweigte Teilstrom T aufgrund der konstruktiven Gestaltung aufgeteilt, indem ein Teilstrom T₁ in die Venturidüse 30 geleitet wird und ein Teilstrom T₂ über die Einströmöffnungen 50 in den Detektionsraum 46 geleitet wird. In der Venturidüse 30 stellt sich daher der gleiche Druck ein wie in dem Detektionsraum 46.

In Zusammenhang mit dem Diagramm in Fig. 3 wird im Folgenden das Funktionsprinzip der erfindungsgemäßen Brennkraftmaschine 10 erläutert. Mittels des im Druckrohr 24 befindlichen Drucksensors 34 (oder alternativ mit einem an einer anderen geeigneten Stelle angeordneten Drucksensor) wird der Druck im Druckrohr 24 stromabwärts der Abzweigung 26 des Teilstroms T überwacht. Die durchgezogene Linie 54 in Fig. 3 stellt den Druck dar, welcher in dem Druckrohr bei Normalbetrieb bzw. während eines bestimmten, konstanten Betriebszustandes herrscht. Die beiden darüber und darunter angeordneten durchzogenen Linien 56, 58 stellen die Messtoleranz dar, innerhalb welcher der Druck im Druckrohr 24 schwanken kann, ohne dass der Drucksensor 34 eine entsprechende Druckänderung detektiert.

Die Anordnung einer Venturidüse 30 gemäß Stand der Technik würde bei einer Beschädigung der Venturidüse 30 stromabwärts der Mündungsstelle 40 nur ein geringer Druckabfall in dem Druckrohr 24 stattfinden (vgl. gestrichelte Linie 60 in Fig. 3), welcher im Bereich der Messtoleranz liegt und somit von dem Drucksensor 34 nicht detektiert werden könnte. Kommt es hingegen bei einer erfindungsgemäßen Brennkraftmaschine 10 zu einer Beschädigung der Venturidüse 30, gelangt die kraftstoffhaltige Ansaugluft lediglich in den Detektionsraum 46 und nicht in die Umgebung.

Wird der Abschnitt stromabwärts der Mündungsstelle 40 und zusätzlich das fluidführende Bauteil 16 im Bereich des Detektionsraumes 46 beschädigt, so kommt es zu einem signifikanten Druckabfall gemäß der strichpunktierten Linie 62 in Fig. 3. Dieser Druckabfall liegt außerhalb der Messtoleranz des Drucksensors 34, so dass er von einer diesem Drucksensor 34 zugeordneten Auswerteeinheit detektierbar ist. So kann verhindert werden, dass kraftstoffhaltige Ansaugluft, welche stromabwärts der Mündungsstelle 40 aus der beschädigten Venturidüse 30 strömt, unbemerkt in die Umgebung gelangt.

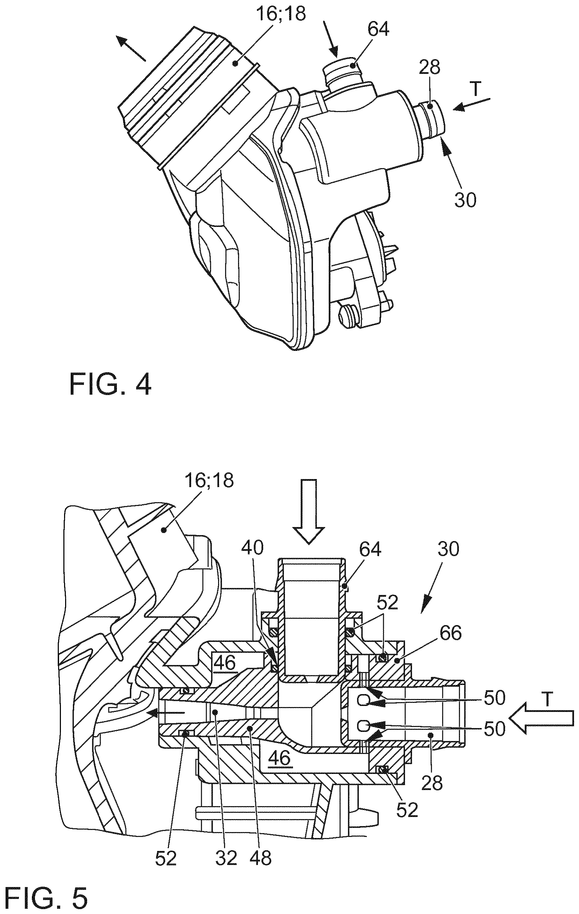

In den Fig. 4 und 5 ist eine erste Ausführungsform einer Brennkraftmaschine mit einer Ansaughutze 18 als fluidführendes Bauteil 16 dargestellt, in welchem auch eine Venturidüse 30 integriert ist.

Wie in der Schnittdarstellung von Fig. 5 gut erkennbar ist, ist die Venturidüse 30 bei dieser Ausführungsform mehrteilig ausgebildet. Sie umfasst einen als separates Element ausgebildeten Einströmkanal 28, einen als separates Elemente ausgebildeten Anschluss 64 für die Tankentlüftungsleitung 38 sowie einen separat ausgebildeten Grundkörper 66 mit dem Ausströmkanal 32 auf. Die Venturidüse 30 ist derart von einem Gehäuseabschnitt der Ansaughutze 18 umgeben, dass um einen Abschnitt des Ausströmkanals 32, um einen Abschnitt des Anschlusses 64 für die Tankentlüftungsleitung 38 und um einen Abschnitt des Einströmkanals 28 der Detektionsraum 46 gebildet ist. Dieser Detektionsraum 46 ist im Bereich der Kanäle 28, 32 und des Anschlusses 64 gegenüber der Umgebung mittels O-Ringen 52 abgedichtet.

Die Einströmöffnungen 50 den Detektionsraum 46 sind in dieser ersten Ausführungsform in dem Einströmkanal 28 ausgebildet. Dazu sind für Teilstrom T₁ vorliegend in dem Einströmkanal sich in radialer Richtung erstreckende Einströmöffnungen 50 vorgesehen. Die Einströmöffnungen 50 sind in dem gezeigten Ausführungsbeispiel so ausgelegt, dass der Gesamt-Strömungsquerschnitt in etwa einer Durchgangsöffnung mit einem Durchmesser von 10 mm entspricht.

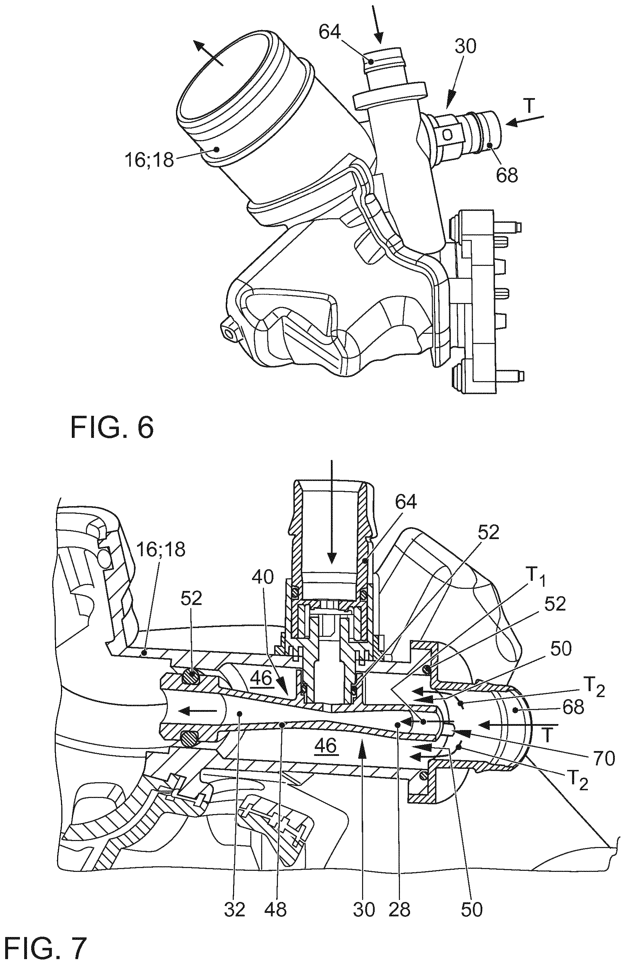

In den Fig. 6 und 7 ist eine zweite Ausführungsform einer Brennkraftmaschine mit einer Ansaughutze 18 als fluidführendes Bauteil 16 und einer daran angeordneten Venturidüse 30 dargestellt. Im Folgenden wird nur auf die Unterschiede zu der ersten Ausführungsform eingegangen. In dieser zweiten Ausführungsform ist die Venturidüse 30 einstückig ausgebildet und umfasst einen Anschlussstutzen 68. Der Anschlussstutzen 68 ist an dem Einlasskanal 28 ausgebildet und mittels eines Verbindungssteges 70 oder mittels mehrerer Verbindungsstege 70 (in der Schnittdarstellung in Fig. 7 ist nur ein Verbindungssteg 70 zu sehen) mit dem Einlasskanal 28 verbunden.

Zunächst strömt der gesamte Teilstrom T in den Anschlussstutzen 68, am Beginn des Einlasskanals 28, der einen deutlich kleineren Durchmesser aufweist als der Anschlussstutzen 68, wird dann ein erster Teilstrom T₁ in den Einlasskanal 28 geleitet und ein zweiter Teilstrom T₂ wird achsparallel dazu radial außenseitig über Einströmöffnungen 50 unmittelbar in den Detektionsraum 46 geleitet. Bei dieser Ausführungsform sind die Strömungsverluste aufgrund der nicht in die radiale Richtung erforderlichen Umlenkung und der somit direkten Einleitung des Teilstroms T₂ in den Detektionsraum geringer.

### Bezugszeichenliste

- 10: Brennkraftmaschine
- 12: Ansaugstrecke
- 14: Brennraum
- 16: fluidführendes Bauteil
- 18: Ansaughutze
- 20: Abgasturbolader
- 22: Drosselklappe
- 24: Druckrohr
- 26: Abzweigung
- 28: Einströmkanal
- 30: Venturidüse
- 32: Ausströmkanal
- 34: Drucksensor
- 36: Kraftstofftank
- 38: Tankentlüftungsleitung
- 40: Mündungsstelle
- 42: Aktivkohlebehälter
- 44: Drucksensor
- 46: Detektionsraum
- 48: Ausströmabschnitt
- 50: Einströmöffnung
- 52: O-Ring
- 54: Linie
- 56: Linie
- 58: Linie
- 60: Linie
- 62: Linie
- 64: Anschluss
- 66: Grundkörper
- 68: Anschlussstutzen
- 70: Verbindungssteg
- 72: Kraftstofftankisolierventil
- 74: Diagnosemodul Trankleckage
- 76: Druck-/Temperatursensor
- 78: Tankentlüftungsventil

## Patentansprüche

1. Brennkraftmaschine mit einem Kraftstofftank (36), einer Tankentlüftungsleitung (38) und einer in einem fluidführenden Bauteil (16) vorgesehenen Venturidüse (30), wobei die Venturidüse (30) einen Einströmkanal (28), eine sich stromabwärts des Einströmkanals (28) anschließende Mündungsstelle (40) mit einer fluidalen Verbindung zu der Tankentlüftungsleitung (38) und einen sich stromabwärts der Mündungsstelle (40) anschließenden Ausströmkanal (32) aufweist, wobei ein Ausströmabschnitt (48) der Venturidüse (30) stromabwärts der Mündungsstelle (48) derart von dem Bauteil (16) umgeben ist, dass um den Ausströmabschnitt (48) herum ein Detektionsraum (46) gebildet ist,
**dadurch gekennzeichnet,**
**dass**
der Detektionsraum (46) mindestens eine Eintrittsöffnung (50) aufweist, über welche der Detektionsraum (46) mit Druck beaufschlagbar ist und
**dass**
mindestens ein Drucksensor (34) zur Überwachung des Drucks im Detektionsraum (46) vorgesehen ist.

2. Brennkraftmaschine nach dem vorstehenden Anspruch, **dadurch gekennzeichnet, dass** auch der Einströmkanal (28) zumindest teilweise und/oder ein Anschluss (64) zur Tankentlüftungsleitung (38) zumindest teilweise von dem fluidführenden Bauteil (16) umgeben sind.

3. Brennkraftmaschine nach einem der vorstehenden Ansprüche, **dadurch gekennzeichnet, dass** das fluidführende Bauteil (16) eine Ansaughutze (18) oder ein Abgasturbolader (20) ist.

4. Brennkraftmaschine nach einem der vorstehenden Ansprüche, **dadurch gekennzeichnet, dass** die Eingangsöffnung (50) zur Beaufschlagung des Detektionsraumes (46) mit Druck fluidal mit einem Druckrohr (24) stromabwärts eines Abgasturboladers (20) verbunden ist.

5. Brennkraftmaschine nach einem der vorstehenden Ansprüche, **dadurch gekennzeichnet, dass** der Drucksensor (34) in dem Druckrohr (24) stromabwärts des Abgasturboladers (20) angeordnet ist.

6. Brennkraftmaschine nach einem der vorstehenden Ansprüche, **dadurch gekennzeichnet, dass** die mindestens eine Eingangsöffnung (50) in den Detektionsraum (46) vor oder in dem Einströmkanal (28) der Venturidüse (30) ausgebildet ist.

7. Brennkraftmaschine nach einem der vorstehenden Ansprüche, **dadurch gekennzeichnet, dass** die mindestens eine Eingangsöffnung (50) in den Detektionsraum (46) strömungsparallel zu dem Einströmkanal (28) der Venturidüse (30) ausgebildet ist.

8. Brennkraftmaschine nach einem der vorstehenden Ansprüche, **dadurch gekennzeichnet, dass** stromaufwärts des Einströmkanals (28) der Venturidüse (30) ein Anschlussstutzen (68) vorgesehen ist.

9. Brennkraftmaschine nach einem der vorstehenden Ansprüche, **dadurch gekennzeichnet, dass** die Venturidüse (30) mehrteilig ausgebildet ist.

10. Brennkraftmaschine nach einem der vorstehenden Ansprüche, **dadurch gekennzeichnet, dass** die Venturidüse (30) und/oder das fluidführende Bauteil (16) vollständig oder teilweise aus Kunststoff hergestellt ist.

## Claims

1. Internal combustion engine having a fuel tank (36), having a tank ventilation line (38) and having a Venturi nozzle (30) which is provided in a fluid-conducting component (16), wherein the Venturi nozzle (30) has an inflow channel (28), an opening-in point (40) which adjoins the inflow channel (28) in a downstream direction and which has a fluidic connection to the tank ventilation line (38), and an outflow channel (32) which adjoins the opening-in point (40) in a downstream direction, wherein an outflow section (48) of the Venturi nozzle (30) downstream of the opening-in point (48) is surrounded by the component (16) such that a detection chamber (46) is formed around the outflow section (48), **characterized in that** the detection chamber (46) has at least one inlet opening (50) via which the detection chamber (46) can be charged with pressure, and **in that** at least one pressure sensor (34) for monitoring the pressure in the detection chamber (46) is provided.

2. Internal combustion engine according to the preceding claim, **characterized in that** the inflow channel (28) is also at least partially, and/or a connection (64) to the tank ventilation line (38) is also at least partially, surrounded by the fluid-conducting component (16).

3. Internal combustion engine according to any of the preceding claims, **characterized in that** the fluid-conducting component (16) is an intake scoop (18) or an exhaust-gas turbocharger (20).

4. Internal combustion engine according to any of the preceding claims, **characterized in that** the inlet opening (50) for the charging of the detection chamber (46) with pressure is fluidically connected to a pressure pipe (24) downstream of an exhaust-gas turbocharger (20).

5. Internal combustion engine according to any of the preceding claims, **characterized in that** the pressure sensor (34) is arranged in the pressure pipe (24) downstream of the exhaust-gas turbocharger (20).

6. Internal combustion engine according to any of the preceding claims, **characterized in that** the at least one inlet opening (50) into the detection chamber (46) is formed upstream of or in the inflow channel (28) of the Venturi nozzle (30).

7. Internal combustion engine according to any of the preceding claims, **characterized in that** the at least one inlet opening (50) into the detection chamber (46) is formed so as to be parallel in terms of flow with respect to the inflow channel (28) of the Venturi nozzle (30).

8. Internal combustion engine according to any of the preceding claims, **characterized in that** a connection piece (68) is provided upstream of the inflow channel (28) of the Venturi nozzle (30).

9. Internal combustion engine according to any of the preceding claims, **characterized in that** the Venturi nozzle (30) is of multi-part form.

10. Internal combustion engine according to any of the preceding claims, **characterized in that** the Venturi nozzle (30) and/or the fluid-conducting component (16) is produced entirely or partially from plastic.

## Revendications

1. Moteur à combustion interne muni d'un réservoir de carburant (36), d'une conduite de purge d'air de réservoir (38) et d'une buse de Venturi (30) prévue dans un composant conducteur de fluide (16), la buse de Venturi (30) comprenant un canal d'admission (28), un emplacement d'embouchure (40) s'ensuivant en aval du canal d'admission (28), muni d'une connexion fluidique avec la conduite de purge d'air de réservoir (38), et d'un canal d'évacuation (32) s'ensuivant en aval de l'emplacement d'embouchure (40),
dans lequel
une section d'évacuation (48) de la buse de Venturi (30) est entourée par le composant (16) en aval de l'emplacement d'embouchure (48) de telle sorte qu'une chambre de détection (46) soit formée autour de la section d'évacuation (48),
**caractérisé en ce que**
la chambre de détection (46) comprend au moins une ouverture d'entrée (50), par l'intermédiaire de laquelle la chambre de détection (46) peut être sollicitée en pression, et
**en ce qu'**au moins un capteur de pression (34) est prévu pour la surveillance de la pression dans la chambre de détection (46).

2. Moteur à combustion interne selon la revendication précédente, **caractérisé en ce que** le canal d'admission (28) est également entouré au moins partiellement et/ou un raccordement (64) avec la conduite de purge d'air de réservoir (38) est également entouré au moins partiellement par le composant conducteur de fluide (16) .

3. Moteur à combustion interne selon l'une quelconque des revendications précédentes, **caractérisé en ce que** le composant conducteur de fluide (16) est un évent d'aspiration (18) ou un turbocompresseur de gaz d'échappement (20).

4. Moteur à combustion interne selon l'une quelconque des revendications précédentes, **caractérisé en ce que** l'ouverture d'entrée (50) pour la sollicitation de la chambre de détection (46) en pression est connectée fluidiquement avec un tube de pression (24) en aval d'un turbocompresseur de gaz d'échappement (20).

5. Moteur à combustion interne selon l'une quelconque des revendications précédentes, **caractérisé en ce que** le capteur de pression (34) est agencé dans le tube de pression (24) en aval du turbocompresseur de gaz d'échappement (20).

6. Moteur à combustion interne selon l'une quelconque des revendications précédentes, **caractérisé en ce que** ladite au moins une ouverture d'entrée (50) dans la chambre de détection (46) est formée avant ou dans le canal d'admission (28) de la buse de Venturi (30).

7. Moteur à combustion interne selon l'une quelconque des revendications précédentes, **caractérisé en ce que** ladite au moins une ouverture d'entrée (50) dans la chambre de détection (46) est configurée parallèlement à l'écoulement par rapport au canal d'admission (28) de la buse de Venturi (30).

8. Moteur à combustion interne selon l'une quelconque des revendications précédentes, **caractérisé en ce qu'**un embout de raccordement (68) est prévu en amont du canal d'admission (28) de la buse de Venturi (30).

9. Moteur à combustion interne selon l'une quelconque des revendications précédentes, **caractérisé en ce que** la buse de Venturi (30) est configurée à plusieurs parties.

10. Moteur à combustion interne selon l'une quelconque des revendications précédentes, **caractérisé en ce que** la buse de Venturi (30) et/ou le composant conducteur de fluide (16) sont fabriqués en totalité ou en partie en matière plastique.
